(19) Europäisches Patentamt

European Patent Office

Office européen des brevets

(11) Veröffentlichungsnummer: **0 322 726 B1**

## (12) EUROPÄISCHE PATENTSCHRIFT

(45) Veröffentlichungstag der Patentschrift:
07.08.91 Patentblatt 91/32

(21) Anmeldenummer: 88121355.7

(22) Anmeldetag: 21.12.88

(51) Int. Cl.⁵: **B23D 49/00**, B23D 51/16,
B23D 51/18, B23D 59/04

(54) Sägemaschine.

(30) Priorität: 29.12.87 DE 3744432

(43) Veröffentlichungstag der Anmeldung:
05.07.89 Patentblatt 89/27

(45) Bekanntmachung des Hinweises auf die
Patenterteilung:
07.08.91 Patentblatt 91/32

(84) Benannte Vertragsstaaten:
CH DE FR GB IT LI

(56) Entgegenhaltungen:
DE-A- 2 845 138
DE-C- 384 536
DE-C- 927 484

(73) Patentinhaber: Kienmoser, Hermann
Burghagler Strasse 43
W-8887 Bachhagel (DE)

(72) Erfinder: Kienmoser, Hermann
Burghagler Strasse 43
W-8887 Bachhagel (DE)

(74) Vertreter: KOHLER SCHMID + PARTNER
Patentanwälte
Ruppmannstrasse 27
W-7000 Stuttgart 80 (DE)

## Beschreibung

Die Erfindung betrifft eine Sägemaschine mit einem in einem Maschinengestell um eine Achse schwenkbar und linear verschiebbar gelagerten Werkzeugträger, an dem ein gerades Sägeblatt befestigbar ist, mit einer Antriebsvorrichtung für die Verschiebebewegung des Werkzeugträgers, wobei der Werkzeugträger im Maschinengestell derart angeordnet ist, daß die Richtung seiner Schnittbewegung gegenüber der Horizontalebene unter einem Winkel von mehr als 45°, vorzugsweise nahezu rechtwinkling verläuft, wobei der Arbeitshub des Sägeblatts im wesentlichen von oben nach unten verläuft.

Eine derartige Maschine ist aus der DE-A-2845138 bekannt. Der bügelförmige Werkzeugträger ist im unteren Maschinenbereich schwenkbar gelagert. Der Antrieb durch eine Schubkurbel liegt unterhalb des Werkzeugträgers und die Maschine führt einen ziehenden Schnitt aus.

Bei anderen bekannten Sägemaschinen, die mit dem sogenannten stoßenden Räumschnitt arbeiten, verläuft die Schnittbewegung des das Sägeblatt haltenden Werkzeugträgers, der eine bügelartige oder U-förmige Gestalt hat, zu Beginn eines Sägevorgangs etwa unter einem Winkel von 30° und weniger zur Horizontalebene, und am Ende des Sägevorgangs etwa parallel zur Horizontalebene. Die Hublänge des Werkzeugträgers ist bei bekannten Sägen durch Verändern der Lage eines Verbindungsbolzens eines Exzenterantriebs in verhältnismäßig engen Grenzen veränderbar. Daher wird üblicherweise das Sägeblatt nur auf einem Teil seiner Länge ausgenutzt, wodurch die Werkzeugkosten vergrößert werden.

Die Hublänge kann, abgesehen von der Begrenzung der Verstellmöglichkeit durch den Exzenterantrieb der bekannten Sägemaschinen, deswegen nicht um größere Beträge variiert werden, weil hierbei von Anfang an eine der größten Hublänge entsprechende Stellfläche für die Maschine vorgesehen werden müßte, und zwar weil aus Unfallschutzgründen verhindert werden muß, daß das freie Ende des Werkzeugträgers allzu weit über den Maschinengrundriß hinausragt.

Aus der DE-C-927484 ist eine Bügelsäge mit hydraulischem Antrieb bekannt. Sie führt einen Parallelschnitt aus.

Der Erfindung liegt die Aufgabe zugrunde, eine Sägemaschine der eingangs geschilderten Art zu schaffen, die mit dem für Sägearbeiten besonders günstigen stoßenden Räumschnitt arbeitet. Diese Aufgabe wird dadurch gelöst, daß die Sägemaschine einen stoßenden Räumschnitt ausführt, daß die Achse im oberen Bereich des Maschinengestells angeordnet ist, daß Zähne des Sägeblatts zum Hauptteil des Werkzeugträgers weisen, derart, daß ein zu sägendes Werkstück im Inneren der von dem Werkzeugträger und dem Sägeblatt umschlossenen Fläche anzuordnen ist, daß die Schrägstellung des Sägeblatts relativ zur Richtung der linearen Verschiebung des Werkzeugträgers derart gewählt ist, daß unter der Annahme einer drehfesten Anordnung an der Achse die Zähne während des Arbeitshubs des Sägeblatts immer tiefer in das Werkstück eingreifen, und daß die Antriebsvorrichtung als hydraulische Antriebsvorrichtung, deren Hublänge veränderbar ist, ausgebildet ist.

Vorteile der Erfindung liegen darin, daß deswegen, weil die Schnittbewegung des Werkzeugträgers im Großen und Ganzen in senkrechter Richtung erfolgt, eine Vergrößerung der Stellfläche der Maschine zum Ermöglichen eines möglichst großen Arbeitshubes nicht erforderlich ist. In der Höhe steht im allgemeinen ausreichend Platz zur Verfügung. Da die Schnittbewegung des Werkzeugträgers im wesentlichen von oben nach unten verläuft, befindet sich der Maschinist mit Sicherheit außerhalb der Stoßrichtung des Werkzeugträgers. Weiter ist von Vorteil, daß die Auflagefläche, auf der das zu sägende Werkstück aufliegt, gegenüber bekannten Sägemaschinen in eine für die Handhabung durch den Maschinisten besser geeignete Höhe gebracht werden kann, beispielsweise in eine Höhe von etwa einem Meter über der Standfläche des Maschinisten. Bei einer derartigen Höhe der Auflagefläche kann der Maschinist das Werkstück bequem handhaben und muß nicht, wie bei bekannten Maschinen, in stark gebückter Haltung, die die Wirbelsäule auf Dauer schädigt, an dem Werkstück eingreifen, um dieses beispielsweise in die richtige Lage zu rücken. Weiter ist von Vorteil, daß deswegen, weil sich das Sägeblatt in einer nahezu vertikalen Lage befindet, Kühlflüssigkeit, die oberhalb des Werkstücks an die Sägezähne des Sägeblattes gebracht wird, in die Lücken zwischen den Sägezähnen eindringt und durch diese Lücken in den Bereich der Spanbildung kommt. Hierdurch wird das Sägeblatt wirksam gekühlt und geschmiert, so daß der Verschleiß des Sägeblatts geringer ist und die Schnittgüte ebenfalls verbessert werden kann. Die gesamte Schnittstelle kann einfach mit Kühlflüssigkeit beim Arbeitshub und Rückhub überflutet werden. Die Späne werden durch die Schwerkraft und die Kühlflüssigkeit leicht entfernt. Ferner ist von Vorteil, daß die Verletzungsgefahr verringert ist, daß der Maschinist den Sägevorgang genau beobachten kann und daß der Zugriff zum Werkstück auf kleine Entfernung möglich ist. Durch den Hydraulikantrieb ist eine einfache Steuerung der Hublänge und der Schnittgeschwindigkeit möglich. Ruckartige Beschleunigungen am Ende des Arbeitshubs und Rückhubs können vermieden werden. Der Antriebsmotor ist zweckmäßig von dem Maschinengestell abgesetzt. Da er sich nicht unterhalb des Werkzeugs befindet, können nicht Späne auf ihn fallen. Unterhalb des Werkzeugs kann ein Späneförderer angeordnet werden.

Vorteilhaft ist der Schwerpunkt des Schwenkrahmens mit dem an ihm gelagerten Werkzeugträger bezüglich der Schwenkachse des Schwenkrahmens derart angeordnet, daß der Schwenkrahmen ohne Einwirkung anderer Kräfte durch die Schwerkraft in eine etwa vertikale Stellung gebracht wird. Hierbei ist von Vorteil, daß die Vorschubkraft, mit der das Sägeblatt gegen das Werkstück gedrückt wird, vom Gewicht des Schwenkrahmens und Werkstückträgers nicht im Sinn einer Vergrößerung beeinflußt wird.

Vorteilhaft verläuft die Gerade, auf der das Sägeblatt bezüglich des Werkzeugträgers durch die Antriebsvorrichtung für den Werkzeugträger verschoben wird, in einem Abstand von dem Schwenklager derartig, daß beim Arbeitshub die auf das Sägeblatt wirkenden Reaktionskräfte bestrebt sind, das Sägeblatt vom Werkstück abzuheben. Hierbei ist von Vorteil, daß die Kraft, mit der das Sägeblatt gegen das Werkstück gedrückt wird, nicht durch den Sägevorgang selbst in nicht berechenbarer Weise vergrößert wird.

Bei einer Ausführungsform der Erfindung ist für die Vorschubbewegung des Werkzeugträgers eine zweite Kolben-Zylinder-Einheit vorgesehen. Dabei ist von Vorteil, daß eine einfache, schnelle und genaue Steuerung der Schwenkbewegung des Schwenkrahmens möglich ist.

Bei einer Ausführungsform der Erfindung ist vorgesehen, daß die Antriebsvorrichtung eine Mehrzahl von Pumpen zur Förderung von Hydrauliköl aufweist, und daß die Pumpen durch einen Getriebemotor mit verstellbarer Übersetzung des Getriebes, vorzugsweise stufenloser Verstellbarkeit der Übersetzung, angetrieben sind. Hierbei ist von Vorteil, daß die Geschwindigkeit der Maschine in weiten Grenzen verändert werden kann.

Bei einer Ausführungsform der Erfindung ist vorgesehen, daß die Wellen der Pumpen gleichachsig angeordnet und gemeinsam angetrieben sind. Dies bietet Vorteile bei einem Motorausfall und sichert eine jeweils gleiche Antriebsdrehzahl für die Pumpen.

Bei einer Ausführungsform der Erfindung ist vorgesehen, daß die Druckseite einer Pumpe mit einem Ausgang eines Ventils über ein Druckbegrenzungsventil verbunden ist, das mit der Druckseite einer weiteren Pumpe und wahlweise mit einem der beiden Anschlüsse einer den Werkzeugträger relativ zum Schwenkrahmen antreibenden Antriebsvorrichtung über ein Steuerventil verbindbar ist. Hierbei ist von Vorteil, daß ein großes Verhältnis zwischen der maximalen und der minimalen Sägegeschwindigkeit (Schnittgeschwindigkeit) möglich ist.

Bei einer Ausführungsform der Erfindung ist vorgesehen, daß eine Pumpe zum Antrieb einer Anhebe- und Vorschubsteuerung für das Sägeblatt mittels einer Vorrichtung zur Volumensteuerung mit den Anschlüssen einer die Abhebe- und Vorschubbewegung ausführenden Antriebsvorrichtung verbindbar ist. Hier ist von Vorteil, daß der Vorschubweg und Abhebeweg sehr genau steuerbar ist. Außerdem kann eine einzige Pumpe dabei den Vorschub und das Abheben steuern, was zu einem guten Wirkungsgrad führt und Schwingungen vermeiden hilft.

Bei einer Ausführungsform der Erfindung ist vorgesehen, daß die Vorrichtungen zur Volumensteuerung einen in einem Zylinder verschiebbaren Kolben aufweisen, und daß eine Vorrichtung zum Zurückführen des Kolbens in seine Ausgangsstellung vorgesehen ist. Dabei ist von Vorteil, daß die Vorrichtung zur Volumensteuerung einfach, schnell und verlustlos rückgestellt werden kann. Weiterhin kann die Volumensteuerung hochgenau ausgeführt werden. Dies ist auch deshalb von Vorteil, weil dadurch die Zerspanungsleistung der Sägemaschine optimal ausgenützt werden kann.

Bei einer Ausführungsform der Erfindung ist eine Vorrichtung zum Verändern der Schrägstellung des Sägeblatts relativ zum Werkzeugträger vorgesehen. Dabei ist von Vorteil, daß die Schrägstellung des Sägeblatts an unterschiedlich harte Werkstücke angepaßt werden kann.

Bei einer Ausführungsform der Erfindung ist vorgesehen, daß der Werkzeugträger am Schwenkrahmen mittels einer wälzgelagerten verdrehspielfreien Linearlagereinheit, die Querkräfte in allen Richtungen aufnimmt, verschiebbar geführt ist. Hier ist von Vorteil, daß der Werkzeugträger gegen Verkanten gesichert und hochgenau verschiebbar geführt ist, wodurch die Schnittqualität verbessert werden kann. Einem Verkanten wirkt auch eine Anordnung der ersten Kolben-Zylinder-Einheit in der Nähe der Schiebeführung entgegen, wie dies beim Ausführungsbeispiel vorgesehen ist.

Bei einer Ausführungsform der Erfindung ist vorgesehen, daß eine Kühlmitteldüse oberhalb des Werkstücks in konstantem Abstand von den Zähnen des Werkzeugs angeordnet ist. Hierbei ist von Vorteil, daß das Sägeblatt und die Schnittstelle am Werkstück mit Kühlschmiermittel überflutet werden kann, was die Schnittqualität verbessert und den Werkzeugverschleiß vermindert. Die genannte Düse kann vorteilhaft am Schwenkrahmen befestigt sein.

Weitere Merkmale und Vorteile der Erfindung ergeben sich aus der nachfolgenden Beschreibung eines Ausführungsbeispiels der Erfindung anhand der Zeichnung, die erfindungswesentliche Einzelheiten zeigt, und aus den Ansprüchen. Die einzelnen Merkmale können je einzeln für sich oder zu mehreren in beliebiger Kombination bei einer Ausführungsform der Erfindung verwirklicht sein. Es zeigen

Fig. 1      eine Seitenansicht eines Ausführungsbeispiels einer Sägemaschine für den stoßenden Räumschnitt,

Fig. 2    eine Vorderansicht der Maschine der Fig. 1 in Richtung des Pfeils II in Fig. 1,

Fig. 3    ein Schnitt entsprechend der Linie III-III in Fig. 2,

Fig. 4    eine der Blickrichtung der Fig. 1 entsprechende Seitenansicht des Werkzeugträgers mit Schwenkrahmen, teilweise aufgebrochen,

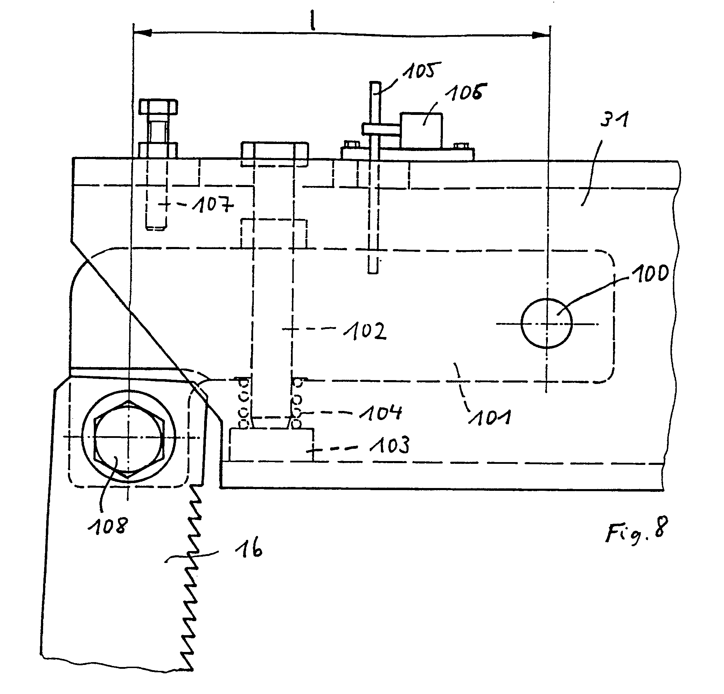

Fig. 5    eine Einzelheit der Fig. 4 im Querschnitt entsprechend der Linie V-V in Fig. 4,

Fig. 6    einen Teil der Hydraulik der Maschine nach Fig. 1 mit Antriebs- und Schnittsteuerung.

Fig. 7    den Teil der Hydraulik für die Abhebe- und Vorschubsteuerung,

Fig. 8    eine Einzelheit eines Werkzeughalters.

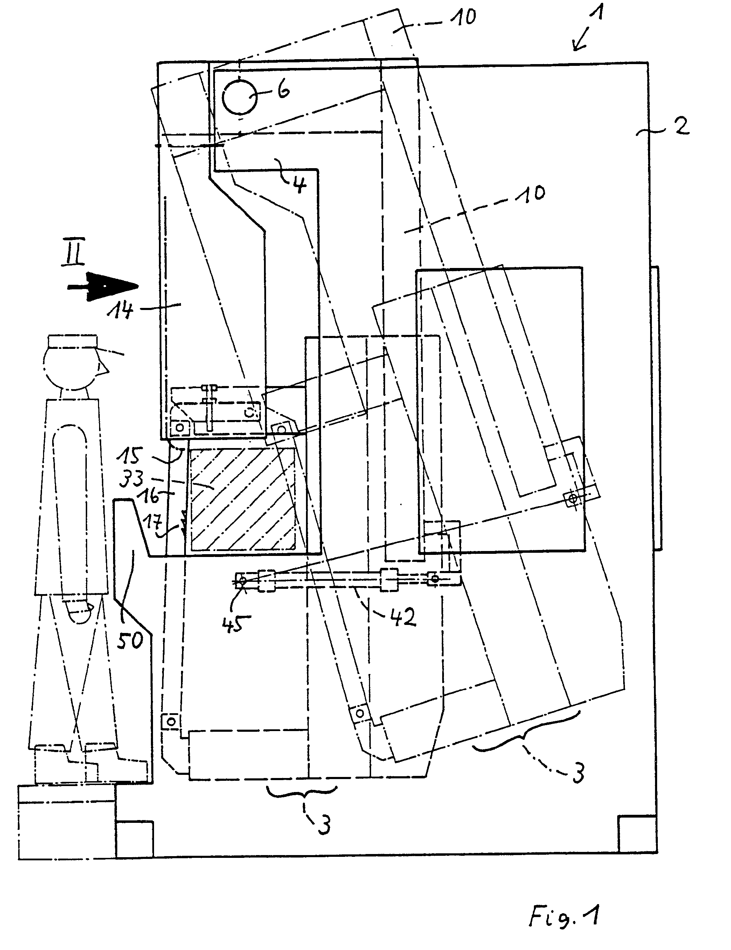

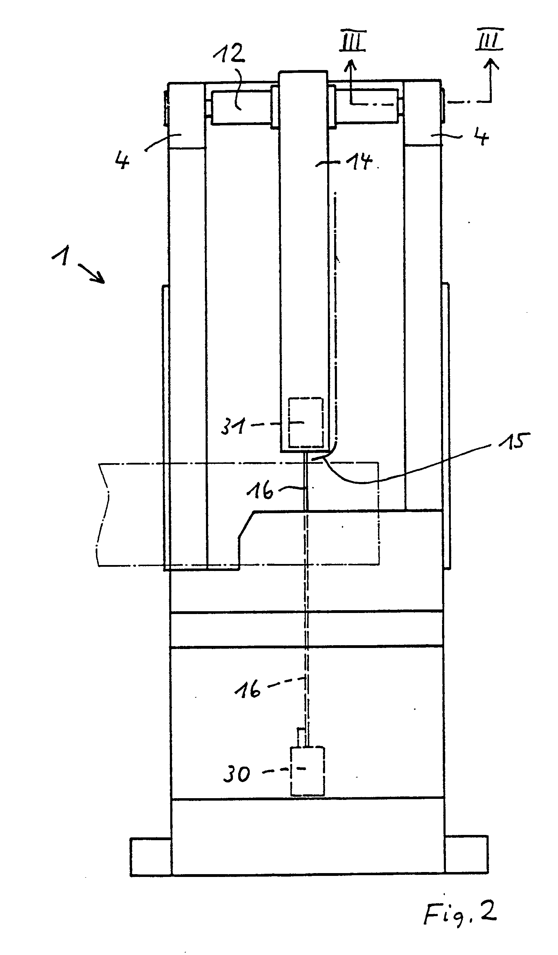

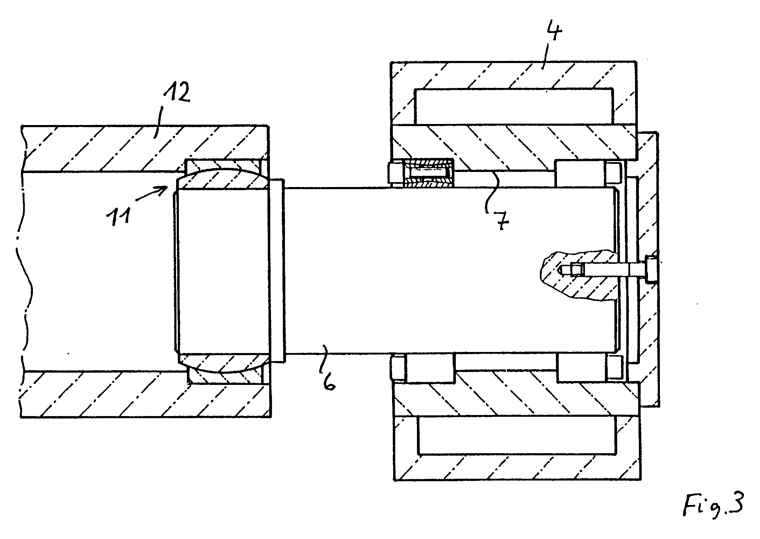

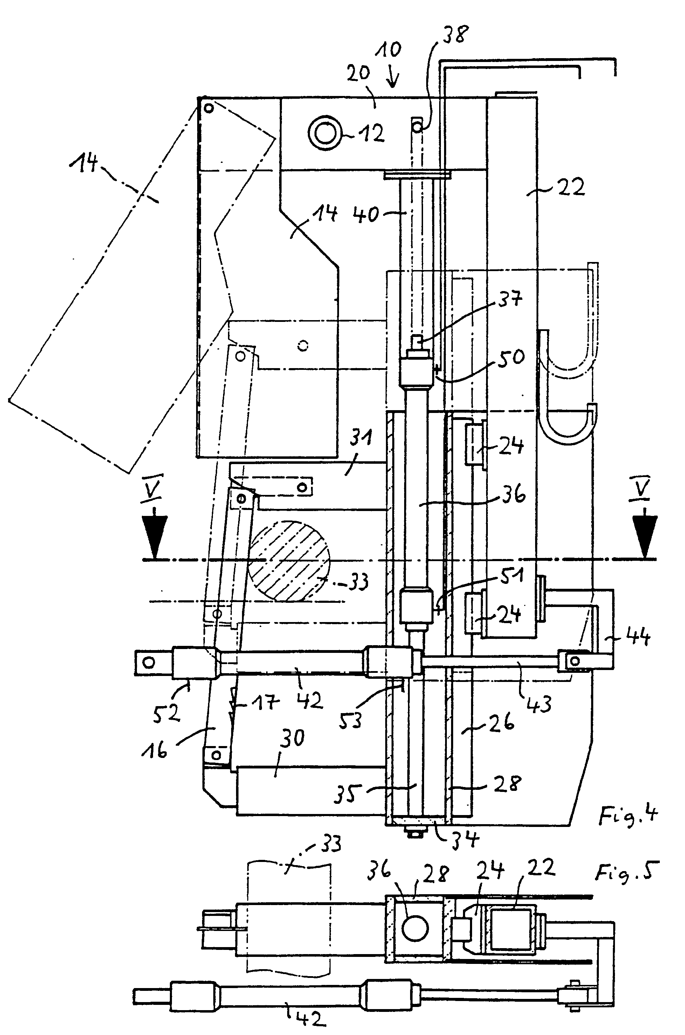

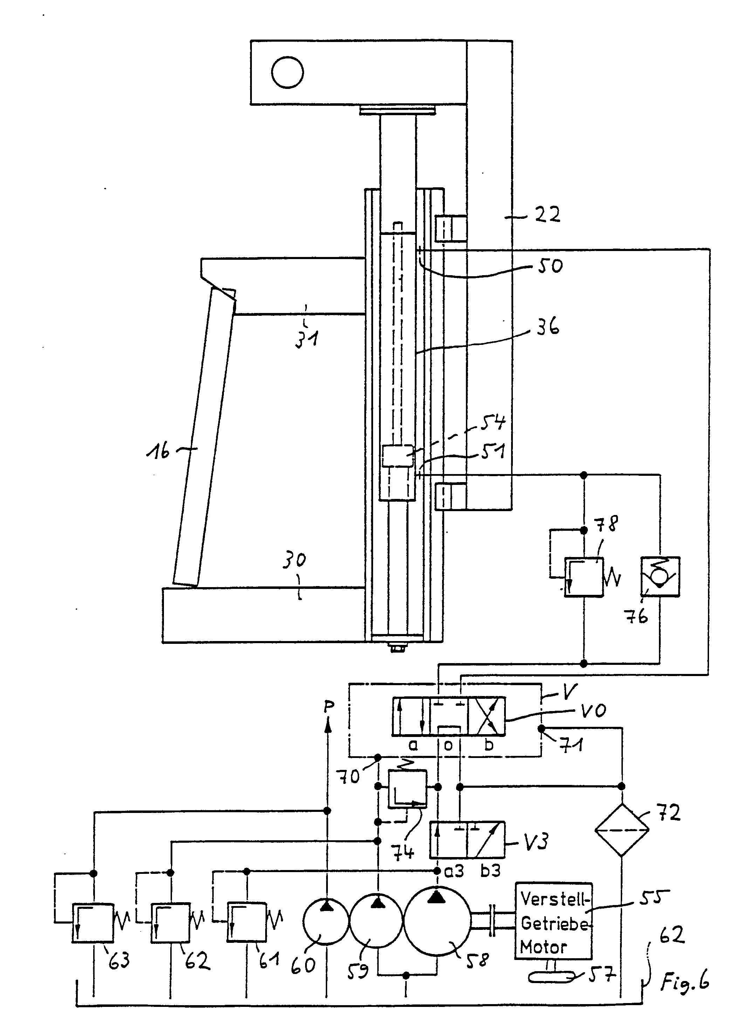

Die Figuren sind nicht maßstäblich. Die Sägemaschine 1 in Fig. 1 weist ein Maschinengestell 2 auf, das in seinem oberen Bereich zwei im Abstand voneinander angeordnete waagrecht verlaufende Tragarme 4 aufweist, vergleiche auch Fig. 2 und 3, in die von außen her jeweils ein Lagerbolzen 6 in entsprechende Aussparungen 7 eingesetzt und verankert ist, wobei beide Lagerbolzen 6 einen Schwenkrahmen 10 um eine waagrechte Achse schwenkbar lagern, indem sie in je ein Schwenklager 11 eingreifen, das an den beiden Enden eines mit dem Schwenkrahmen 10 starr verbundenen Achsrohrs 12 angeordnet ist.

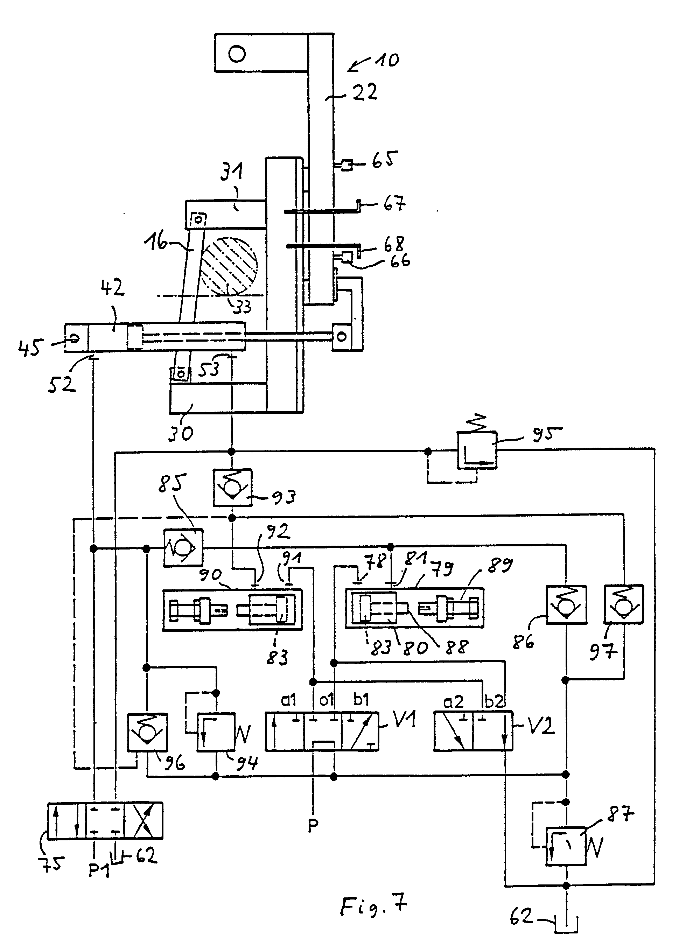

In Fig. 1 ist noch ein um eine rechtwinklig zur Zeichenebene der Fig. 1 schwenkbar gelagertes Schutzblech 14 dargestellt, das zum Schutz des arbeitenden Maschinisten, der sich in der Ansicht der Fig. 1 links von der Maschine befindet, dient. Dieses Schutzblech 14 ist in Fig. 4 in ausgeschwenkter Stellung zu sehen, wie sie für den Werkzeugwechsel nötig ist.

Der Schwenkrahmen 10 ist in Fig. 1 mit gestrichelten Linien in seiner Ruhestellung gezeigt, die er einnimmt, wenn keinerlei von der Hydraulik herrührende Kräfte auf ihn einwirken. In dieser Ruhestellung ist der Schwenkrahmen 10 im wesentlichen vertikal angeordnet. Diese Stellung wird dadurch erreicht, daß sich die durch die Lagerbolzen 6 definierte Schwenkachse des Schwenkrahmens 10 in der Darstellung der Fig. 1 links von einer durch den Schwerpunkt verlaufenden vertikalen Ebene befindet. Die Ruhestellung ist durch einen nicht gezeigten Anschlag gesichert, die den Schwenkrahmen 10 daran hindert, mit seinem unteren Ende weiter nach links zu schwenken als in Fig. 1 dargestellt ist. Die Ruhestellung des Schwenkrahmens 10 ist beim Ausführungsbeispiel gleichzeitig diejenige Stellung, von der aus der Sägevorgang begonnen wird. Hierbei verläuft das Sägeblatt nicht genau vertikal, nimmt bei fortschreitendem Eingriff in das Werkstück eine genau vertikale Stellung ein und schwenkt weiter in eine nicht vertikale Stellung. Die maximale Auslenkung des Schwenkrahmens 10 ist in Fig.1 mit strichpunktierten Linien gezeigt.

Wie in Fig. 4 im einzelnen gezeigt ist, weist der Schwenkrahmen 10 einen in seiner Ruhestellung waagrecht verlaufenden Träger 20 und einen an dessen in Fig. 4 rechtem Ende, also vom Standpunkt des Maschinisten aus hinterem Ende lotrecht nach unten verlaufenden Träger 22 auf. An dem waagrechten Träger 20 ist das Achsrohr 12 angeschweißt. Der senkrechte Träger 22 weist an seinem unteren Endbereich und von dort aus gesehen etwa nach einem Drittel seiner Länge in Fig. 4 auf seiner linken Seite Führungen 24 auf, in denen eine Führungsschiene 26 parallel zur Längsrichtung des senkrechten Trägers 22 verschiebbar geführt ist. Die Führungsschiene 26 ist an einem Tragrohr 28 mit rechteckigem Querschnitt starr befestigt, an dem seinerseits im unteren un oberen Bereich jeweils ein Werkzeughalter 30 bzw. 31 waagrecht und in Fig. 4 nach links verlaufend angeordnet sind, an deren linken Endbereichen das Sägeblatt 16, das an seinen Enden in bekannter Weise je eine Bohrung trägt, verankert ist und zwischen diesen eingespannt ist. Die Richtung der Sägezähne 17 ist in Fig. 1 und 4 an einer Stelle angedeutet. Das Sägeblatt 16 arbeitet somit bei seiner Bewegung von oben nach unten, wobei die Vorschubbewegung in den Fig. 1 und 4 von links nach rechts erfolgt. Das zu sägende Werkstück 33, das in den Fig. 1 und 4 einmal mit rechteckigem und einmal mit rundem Querschnitt angenommen ist, befindet sich zu Beginn des Sägens vollständig innerhalb des von dem Tragrohr 28, den Werkzeughaltern 30 und 31 und dem Sägeblatt 16 umschlossenen Raums. Die Führungen 24 und die Führungsschine 26 sind Teile einer wälzgelagerten, Querkräfte aufnehmenden und in Querrichtung spielfreien Linearlagereinheit.

Eine Düse 15 für ein Kühlschmiermittel ist am Schwenkrahmen 10 befestigt, mit diesem verschwenkbar und und so angeordnet, daß sie das Kühlmittel oberhalb des Werkstücks in kräftigem Strom gegen das Sägeblatt 16, insbesondere auch gegen dessen Zähne, spritzt.

Das Tragrohr 28 und die beiden Werkzeughalter 30 und 31, die miteinander starr verbunden sind, bilden einen Werkzeugträger 3, der das Werkzeug, nämlich das Sägeblatt 16, hält. Der Werkzeugträger 3 selbst ist am Schwenkrahmen 10 linear verschiebbar gelagert, und der Schwenkrahmen 10 ist um eine waagrechte Schwenkachse im Maschinengestell 2 schwenkbar gelagert. Dies führt dazu, daß in ähnlicher Weise wie bei bekannten Sägemaschinen für stoßenden Räumschnitt der Schwenkrahmen 10 während eines Arbeitshubs des Sägeblatts 16 eine Schwenkbewegung ausführt.

Das Tragrohr 28 ist an seinem unteren Ende durch eine Platte 34 verschlossen, an der eine erste Kolbenstange 35 einer ersten Kolben-Zylinder-Einheit 36 festgeschraubt ist. Die Kolben-Zylinder-Einheit 36 ist doppelt wirkend und weist daher im Bereich der beiden Enden ihres Zylinders je einen Hydraulikanschluß 50 und 51 auf. Diese Einheit 36 weist noch eine obere Kolbenstange 37 auf, die einen kleineren Querschnitt hat als die Kolbenstange 35, so daß die wirksame untere Kolbenfläche des Kolbens der Kolben-Zylinder-Einheit 36 kleiner ist als die wirksame obere Kolbenfläche. Die obere Kolbenstange 37 weist in ihrem oberen Endbereich eine Querbohrung auf, die dann, wenn die Kolbenstange 37 relativ zum Zylinder maximal angehoben ist, mit einer Bohrung 38 im waagrechten Träger 20 fluchtet ; durch die miteinander fluchtenden Bohrungen kann dann ein Steckbolzen gesteckt werden, der den Werkzeugträger 3 in einer angehobenen Position arretiert.

Der Zylinder 39 der Kolben-Zylinder-Einheit 36 ist mittels eines Befestigungsrohrs 40, das an seinem oberen Endbereich befestigt ist, mit der Unterseite des waagrechten Trägers 20 starr verbunden. Da sich die beiden Kolbenstangen 35 und 37 der ersten Kolben-Zylinder-Einheit 36 in dem Tragrohr 28 bzw. innerhalb des Befestigungsrohrs 40 befinden, ist die erste Kolben-Zylinder-Einheit 36 vor Verschmutzung gut geschützt. Einem derartigen Schutz dient auch die Tatsache, daß das Tragrohr 28 weiter nach oben reicht als das Sägeblatt 16.

Wird dem unteren Hydraulikanschluß 51 der Kolben-Zylinder-Einheit 36 Hydrauliköl mit ausreichendem Druck zugeführt, so wird der in Fig. 6 gezeigte Kolben 54 angehoben und hebt damit über die untere Kolbenstange 35 den Werkzeugträger 3 nach oben. Hierbei wird der Leerhub oder Rückhub des Sägeblatt 16 ausgeführt. Wird dem oberen Hydraulikanschluß 50 das Hydrauliköl zugeführt, so wird der Werkzeugträger und dadurch das Sägeblatt 16 nach unten bewegt, und zwar mit einer bei gleichem Druck des Hydrauliköls wegen der größeren wirksamen Kolbenfläche größeren Kraft ; die Bewegung nach unten ist der Arbeitshub des Sägeblatts 16.

Zum Ausführen der Schwenkbewegung des Schwenkrahmens 10 ist eine zweite Kolben-Zylinder-Einheit 42 mit Hydraulikanschlüssen 52, 53 vorgesehen, deren in Fig. 1 und 4 nach recht herausragende Kolbenstange 43 mit dem unteren Ende des senkrechten Trägers 22 verbunden ist, und zwar im Beispiel durch ein im wesentlichen U-förmiges Verbindungsteil 44. Das dem Verbindungsteil 44 abgewandte Ende des Zylinders der zweiten Kolben-Zylinder-Einheit 42 ist an einem im Maschinengestell 2 festen Gelenkpunkt 45 verankert. Beim Verschwenken des Schwenkrahmens 10 verschwenkt sich gleichzeitig die Längsrichtung der zweiten Kolben-Zylinder-Einheit 42, was in Fig. 1 erkennbar ist. Die zweite Kolben-Zylinder-Einheit 42 befindet sich nahe an der Schiebeführung 24, 26.

Die Längsrichtung des Sägeblatts 16 verläuft gegenüber der Längsrichtung der Verschiebebewegung des Werkzeugträgers an dem senkrechten Träger 22 unter einem von 0° verschiedenen Winkel, weil der Befestigungspunkt des oberen Endes des Sägeblatts 16 dichter am Tragrohr 28 liegt als der Befestigungspunkt des unteren Endes des Sägeblatts 16. Während des Arbeitshubs der ersten Kolben-Zylinder-Einheit 36 erzeugt die zweite Kolben-Zylinder-Einheit 42 eine konstante Vorschubkraft. Dies geschieht dadurch, daß nach Ende eines Leerhubs des Sägeblatts 16 dieses zunächst bis nahe an das Werkstück angestellt wird, woraufhin die Zähne des Sägeblatts wegen dessen Schrägstellung bei dessen Arbeitshub mit dem Werkstück in Eingriff kommen. Die dabei vom Sägeblatt 16 auf den Kolben der zweiten Kolben-Zylinder-Einheit 42 ausgeübte Kraft drückt bei Überschreiten eines vom Druckbegrenzungsventil 94 bestimmten Grenzwerts Hydrauliköl durch dieses hindurch, wobei dieses Druckbegrenzungsventil 94 den Druck am Anschluß 52 konstant hält.

Zu Beginn der Sägearbeit befindet sich das Sägeblatt 16 zwischen dem Werkstück 33 und dem Maschinisten. Der Maschinist kann somit den Angriffspunkt des Sägeblatts 16 am Werkstück beim Beginn des Sägens genau sehen. Die Auflagefläche, auf der das Werkstück 33 aufliegt, hat von der Standfläche des Maschinisten aus gemessen eine Höhe von etwa einem Meter. Zum Schutz des Maschinisten bei einem etwaigen Werkzeugbruch dient eine zwischen dem Maschinisten und der Werkstückauflage angeordnete Schutzwand 50. Das Schutzblech 14 kann vom Maschinisten verschwenkt werden, wie in Fig. 4 gezeigt ist, und in der ausgeschwenkten Stellung arretiert werden, um einen guten Zugang zum Werkzeug zu schaffen.

Die zur Sägemaschine 1 gehörende hydraulische Antriebseinheit und die Schnittsteuerung (Betätigung der ersten Kolben-Zylinder-Einheit 36) ist in Fig. 6 gezeigt.

Ein elektrischer Getriebemotor 55 mit durch ein Handrad 57 stufenlos verstellbarem Übersetzungsverhältnis treibt drei mit seiner Welle fest gekoppelte Hydraulikpumpen 58, 59 und 60 an. Deren Ansaugleitungen saugen aus einem Vorratstank 62 Hydrauliköl an. An den Ausgängen jeder Pumpe 58 bis 60 ist jeweils ein Druckbegrenzungsventil 61 bis 63 angeordnet, das beim Überschreiten eines durch das jeweilige Druckbegrenzungsventil vorgegebenen Drucks öffnet und dadurch dafür sorgt, daß das von der jeweiligen Pumpe geförderte Hydrauliköl unmittelbar in den Tank 62 zurückgeleitet wird. Die Pumpen 58 und 59 dienen zum Betrieb des in Fig. 6 gezeigten Teil der Hydraulikanlage, die Pumpe 60 zum Betrieb des in Fig. 7 gezeigten Teils. Die Pumpen sind durch Symbole mit unterschiedlicher Größe dargestellt, um dadurch das unterschiedliche Fördervermögen der Pumpen und den von diesen lieferbaren Druck anschaulich darzustellen. Nachfolgend wird die Arbeitsweise der in Fig. 6 gezeigten Anordnung beschrieben.

Durch die Einstellung der Übersetzung des Getriebemotors 55 kann die Antriebsdrehzahl der Pumpen 58 bis 60 und somit die Fördermenge des Hydrauliköls und dadurch die Antriebsgeschwindigkeit der beiden Kolben-Zylinder-Einheiten bestimmt werden. Um die jeweilige Lage des Werkzeugträgers festzustellen, sind an dem senkrechten Träger 22 des Schwenkrahmens zwei Sensoren 65 und 66 ortsfest angeordnet, die als magnetische Sensoren ausgebildet sind und mit je einem mit dem Werkzeugträger fest verbundenen Metallteil 67 bzw. 68 zusammenwirken, vergleiche hierzu Fig. 7. Das obere Metallteil 67, das die obere Endstellung des Werkzeugträgers bestimmt, ist ortsfest, während das untere Metallteil 68 in seiner Lage durch den Maschinisten veränderbar ist, so daß hierdurch die untere Endstellung des Werkzeugträgers und somit die Hublänge eingestellt werden kann. In Fig. 6 ist eine Schaltventilanordnung V vorgesehen, die das in Fig. 6 gezeigte Schaltventil V0 mit vier Anschlüssen und drei Stellungen seines Steuerschiebers enthält. Der Steuerschieber wird durch ein nicht gezeigtes elektrisch angesteuertes Hilfsschaltventil bewegt, dessen nicht gezeigte elektrische Anschlüsse mit einer elektrischen Steuervorrichtung in Verbindung sind, die auch mit den Anschlüssen der Sensoren 65 und 66 sowie weiteren nicht einzeln gezeigten elektrischen Schaltelementen der Maschine in Verbindung ist. Dem Hilfsschaltventil wird das für seine Funktion nötige unter Druck stehende Hydrauliköl von der Pumpe 59 über einen Anschluß 70 zugeführt, und ein Anschluß 71 leitet das aus dem Hilfsschaltventil austretende Hydrauliköl über einen Filter 72 zurück in den Tank 62. Der Druck am Anschluß 70 wird durch ein Vorspannventil 74 überwacht, das bei Drucküberschreitung Hydrauliköl bei der gezeigten Stellung des Ventils V0 zum Filter 72 ableitet. Das Vorspannventil 74 kann nach dem gleichen Prinzip arbeiten wie die Druckbegrenzungsventile 61 bis 63.

Soll der Werkzeugträger mit dem Sägeblatt 16 angehoben werden, so muß dem unteren Anschluß 51 ersten Kolben-Zylinder-Einheit 36 Hydrauliköl mit ausreichend großem Druck zugeführt werden. Hierzu wird das Steuerventil V0 in die Stellung a gebracht, bei der die in Fig. 6 gezeigten beiden unteren Anschlüsse, die zum Steuerschieber dieses Ventils führen, gerade durchverbunden sind. Somit fördern die Pumpen 58 und 59 Hydrauliköl über ein Rückschlagventil 76 zum Anschluß 51, und gleichzeitig tritt aus dem Anschluß 50 vom Kolben 54 verdrängtes Hydrauliköl aus und gelangt zum oberen Anschluß des Filters 72 und von dort aus zum Tank 62. Bei einem Leitungsbruch der zum Rückschlagventil 76 führenden Leitung wird ein Entweichen des Hydrauliköls aus dem Zylinder der ersten Kolben-Zylinder-Einheit 36 über den unteren Anschluß 51 durch ein Halteventil 78, das ausreichend stark vorgespannt ist, und durch das Rückschlagventil 76 verhindert. Die Ventile V und V0 sowie 76 und 78 befinden sich, was im Schaltbild der Fig. 6 nicht zum Ausdruck kommt, dicht an der ersten Kolben-Zylinder-Einheit 36, um Schwingungen zu verhindern.

Soll das Sägeblatt nach unten bewegt werden, so wird der Steuerschieber des Ventils V0 in seine Stellung b gebracht, in der die Pumpen 58 und 59 das Hydrauliköl zum oberen Anschluß 50 fördern. Das aus dem unteren Anschluß 51 dabei austretende Hydrauliköl kann nicht über das Rückschlagventil 76, wohl aber über das Halteventil 78, dessen Haltedruck dabei überschritten wird, abströmen und gelangt über den Filter 72 zurück zum Tank 62. Bei beiden beschriebenen Vorgängen befindet sich ein elektrisch gesteuertes Ventil V3 in seiner Stellung a3, in der das von der Pumpe 58 geförderte Hydrauliköl am linken Eingang des Ventils V0 gelangt. Wird das Ventil V3 in seine Stellung b3 umgeschaltet, so gelangt das von der Pumpe 58 durch dieses Ventil hindurchgeförderte Hydrauliköl unmittelbar zum oberen Anschluß des Filters 72. Dieses Ventil V3 dient dazu, bei kleiner erforderlicher Antriebsgeschwindigkeit, die kleiner ist als es die Verstellbarkeit des Getriebemotors ermöglicht, den von der Pumpe 58 geförderten Ölstrom von dem Steuerventil V0 fernzuhalten und dabei gleichzeitig durch den im Rücklaufstrom liegenden Filter 72 eine Filterung des im Tank befindlichen Öls zu bewirken.

Wenn sich das Ventil V3 in seiner Stellung b3 befindet, so wird dann, wenn gleichzeitig das Ventil V0 sich in seiner Stellung a oder b befindet, das Hydauliköl, das von der Pumpe 59 gefördert wird und durch das Vorspannventil 74 hindurchgelangt, zum Antrieb der ersten Kolben-Zylinder-Einheit 36 verwendet.

Es versteht sich, daß die Drücke, bei denen die verschiedenen Vorspannventile und Halteventile sowie Druckbegrenzungsventile, die alle in gleicher Bauart ausgebildet sein können, ansprechen, geeignet abgestuft sein müssen, damit die oben und nachfolgend beschriebene Arbeitsweise möglich ist.

Beim Leerhub des Sägeblatts 16 soll dieses von dem Werkstück geringfügig abgehoben werden, wogegen das Sägeblatt 16 beim Arbeitshub mit einer vorbestimmten Kraft gegen das Werkstück gedrückt werden muß. Hierzu dient die Abhebe- und Vorschubsteuerung, die in Fig. 7 gezeigt ist. Der Anschluß P in Fig. 7 steht mit dem Anschluß P in Fig. 6 in Verbindung ; das der in Fig. 7 gezeigten Anordnung zugeführte Hydrauliköl stammt somit ausschließlich von der Pumpe 60.

Um den Werkzeugträger durch Handsteuerung verstellen zu können, sind die Anschlüsse 52 und 53 der zweiten Kolben-Zylinder-Einheit 42 unmittelbar mit einem von Hand schaltbaren Ventil 75 mit vier Anschlüssen und drei Schaltstellung verbunden. In der gezeigten mittleren Schaltstellung sind die zu diesem Ventil 75 führenden Anschlüsse gesperrt. In den beiden anderen Stellungen kann das von einem Anschluß P1 kommende Hydrauliköl entweder dem Anschluß 52 oder dem Anschluß 53 zugeführt werden und das aus dem jeweils anderen Anschluß austretende Hydrauliköl fließt in den Tank 62 zurück. Eine nicht gezeigte Pumpe versorgt den Anschluß P1 und eine hydraulische Spannvorrichtung mit Hydrauliköl. Im Fall einer automatischen Steuerung kann dem Anschluß 52 Hydrauliköl in Stellung b1 des Ventils V1 zugeführt werden. Dabei ist ein weiteres Umschaltventil V2, das wie das Ventil V1 elektrisch steuerbar ist, in seiner Stellung a2. Das Hydrauliköl gelangt somit vom Anschluß P zu einem Anschluß 78 einer Vorrichtung 79, die eine Kolben-Zylinder-Einheit 80 enthält, in die über den Anschluß 78 Hydrauliköl eingeleitet wird, wobei der Kolben 83 gleichzeitig Hydrauliköl auf seiner anderen Seite verdrängt und aus dem Anschluß 81 herausdrückt, von wo aus es über ein Rückschlagventil 85 zum Anschluß 52 der zweiten Kolben-Zylinder-Einheit 42 gelangt. Das aus dieser gleichzeitig verdrängte Hydrauliköl gelangt vom Anschluß 53 über ein Vorspannventil 95 zum Tank 62.

Ein mit dem Anschluß 81 verbundenes weiteres Rückschlagventil 86 ist in Sperrichtung angeordnet. Dessen anderes Ende führt über ein Vorspannventil 87 zum Tank 62. Das aus dem Zylinder 80 herausragende Ende der Kolbenstange 88 wirkt mit einem magnetischen Sensor 89 zusammen, der in seiner Lage verstellbar ist und feststellt, wenn sich die Kolbenstange 88 dem Sensor 89 bis zu einem vorbestimmten Abstand genähert hat. Wenn dies der Fall ist, so bewirkt der Sensor 89 ein Umschalten des Ventils V1 in die Stellung 01, in der die weitere Zufuhr von Hydrauliköl zum Anschluß 78 gesperrt ist. Durch Verstellung des Sensors 89 wird somit der Vorschubweg, den die zweite Kolben-Zylinder-Einheit 42 bewirkt, eingestellt. Durch die Vorrichtung 79 wird eine Mengensteuerung des Hydrauliköls bewirkt, weil die Menge des aus dem Anschluß 81 austretenden Hydrauliköls genau bestimmt wird.Bei dem zuletzt geschilderten Zustand ist der Kolben der zweiten Kolben-Zylinder-Einheit 42 hydraulisch eingespannt, und die Einspannkraft ist durch Verstellen der Vorspannventile 94 und 95 veränderbar.

Das Abheben des Sägeblatts 16 vom Werkstück am Ende des Arbeitshubs wird dadurch bewirkt, daß das Ventil V1 in die Stellung a1 geschaltet wird, wodurch Hydrauliköl einer Vorrichtung 90 zugeführt wird, die genauso aufgebaut ist wie die Vorrichtung 79. Zum Abheben des Sägeblatts 16 vom Werkstück muß sich das Ventil V2 in seiner in der Fig. 7 gezeigten Stellung b2 befinden. Das einem Anschluß 91 der Vorrichtung 90 zugeführte Hydrauliköl bewirkt eine Verschiebung des auch hier mit dem Bezugszeichen 83 versehenen Kolbens, der Hydrauliköl aus dem Anschluß 92 herausdrückt, von wo aus es über ein Rückschlagventil 93 zum Anschluß 53 der zweiten Kolben-Zylinder-Einheit 42 gelangt.

Das Druckbegrenzungsventil 94 begrenzt den beim Vorschub maximal erzeugbaren Druck am Anschluß 52. Damit beim Abheben des Sägeblatts 16 das aus dem Anschluß 52 austretende Hydrauliköl ohne nennenswerten Widerstand abfließen kann, ist parallel zum Druckbegrenzungsventil 94 ein Rückschlagventil 96 mit Fremdsteuerung geschaltet, dessen Steueranschluß durch eine mit gestrichelten Linien dargestellte Leitung mit der Verbindungsleitung zwischen dem Rückschlagventil 93 und dem Anschluß 92 der Vorrichtung 90 verbunden ist. Wenn diese Verbindungsleitung drucklos ist, wirkt das Rückschlagventil 96 als normales Rückschlagventil. Wenn die genannte Verbindungsleitung deswegen, weil aus dem Anschluß 92 Hydrauliköl zum Anschluß 53 der zweiten Kolben-Zylinder-Einheit 42 gefördert wird, unter Druck steht, so wird das bewegliche Ventilteil des Rückschlagventil 96 von seinem Sitz abgehoben und dadurch kann das aus dem Anschluß 52 entweichende Hydrauliköl ohne nennenswerten Widerstand zum Druckbegrenzungsventil 87 und von dort zum Tank 62 gelangen. Das Rückschlagventil 96 wirkt als leicht steuerbares Ventil.

Die Kolben 83 der beiden Vorrichtungen 79 und 90 werden jeweils in ihre Ausgangslage, die sie vor der Zuführung von Hydrauliköl zu den Anschlüssen 78 bzw. 91 einnehmen müssen, dadurch zurückgeführt, daß das Ventil V1 in seine mittlere Stellung 01 gebracht wird, in der kein Hydrauliköl zur Vorrichtung 79 oder 90 gefördert wird, und bei dieser Stellung vom Anschluß P kommendes Hydrauliköl über die Rückschlagventile 86 und 97 zu den Anschlüssen 81 bzw. 92 gelangt, denn es kann wegen des Druckbegrenzungsventils 87 nicht unmittelbar zum Tank 62 abfließen. Das von den Kolben 83 dabei verdrängte Öl fließt über das Ventil V2, das bei diesem Vorgang die jeweils geeignete Stellung einnimmt, ab.

Wegen hier nicht beschriebener Einzelheiten der Hydraulikschaltung wird auf die Zeichnung verwiesen.

Fig. 8 zeigt eine Abschaltvorrichtung, die beim Bruch des Sägeblatts einen elektrischen Schalter betätigt, wodurch das sofortige Stillsetzen der gesamten Maschine möglich ist. Der obere Werkzeughalter 31 weist einen an diesem um einen Achsbolzen 100 schwenkbar gelagerten Hebel 101 auf, an dessen Ende das Sägeblatt 16 befestigt ist. Der Hebel 101 stützt sich in der arbeitsbereiten Stellung mittels einer durch ihn hindurch geführten ausreichend kräftigen Stellschraube 102 an einem Widerlager 103 in der oberen Werkzeughalterung 31 ab. Zwischen dem Widerlager 103 und der Unterseite des Hebels 101 befindet sich eine kräftige Schraubendruckfeder 104 mit einer Druckkraft von etwa 100 daN, die im Fall eines Bruchs des Sägeblatts 16 dem Hebel 101 sehr rasch nach oben verschwenkt, wobei dieser über einen eingeschraubten Stab 105 einen elektrischen Endschalter 106 betätigt, der das sofortige Stillsetzen der Maschine bewirkt. Eine Schraube 107 wirkt als Anschlag für die Bewegung des Hebels 101 nach oben und ermöglicht es außerdem, beim Werkzeugwechsel die Feder 104 zusammenzudrücken. Zum Verändern der Schrägstellung des Sägeblatts 16 kann der Hebel 101 gegen andere Hebel mit abweichender Länge zwischen dem Loch für den Achsbolzen 100 und der Befestigungsschraube 108 für das Sägeblatt 16 ausgetauscht werden.

Bei der beschriebenen Sägemaschine werden während des Sägens durch das Sägeblatt 16 starke von oben nach unten wirkende Schnittkräfte auf das Werkstück 33 ausgeübt. Damit das Werkstück 33 sicher gehalten ist, müssen daher auf dieses nicht nur, wie beim Stand der Technik, in waagrechter Richtung wirkende Spannkräfte ausgeübt werden, sondern auch eine von oben nach unten auf das Werkstück wirkende Kraftkomponente erzeugt werden. Hierzu kann in vorteilhafter Weise ein Schraubstock verwendet werden, bei dem mindestens eine der Backen von unten nach oben in Richtung auf die andere Backe schräg verläuft. Wenn das Werkstück zwischen den Backen festgespannt ist, wird es somit innerhalb eines sich nach oben verengenden, durch die beiden Backen begrenzten Raums gegen ein Ausweichen nach oben unverrückbar festgehalten.

Im Ausführungsbeispiel ist die Sägemaschine für Sägeblätter 16 mit einer Länge von etwa 1140 mm zwischen den Befestigungsaugen konstruiert. Die Schrägstellung (rechtwinklig zur Verschieberichtung des Werkzeugträgers 3 gemessen) ist zwischen etwa 2 mm (für harte Werkstücke) und etwa 20 mm (z.B. für Baustahl) veränderbar. Die Pumpe 58 fördert pro Umdrehung 32 cm³, die Pumpe 59 fördert 8 cm³. Der Motor hat eine Leistung von 11 kW. Sein Getriebe kann im Verhältnis 1 : 5 verstellt werden, was zu einer Drehzahl der Pumpen von 600 bis 3000 Umdrehungen pro Minute führt. Der minimale zur ersten Kolben-Zylinder-Einheit 36 gelieferte Förderstrom des Hydrauliköls, der von den beiden Pumpen 58 und 59 erzeugt wird, ist 4,8 l/min (dabei arbeitet die Pumpe 58 im Umlaufbetrieb), der maximale Förderstrom ist 120 l/min. Das Verhältnis der beiden genannten Förderströme und daher der erzielbaren Geschwindigkeiten des Sägeblatts ist 1 : 25. Die maximale Schnittgeschwindigkeit ist 0.95 m/s, die maximale Rückhubgeschwindigkeit der ersten Kolben-Zylinder-Einheit ist 1,30 m/s. Das Verhältnis dieser beiden Werte ist 1 : 1,37. Die maximale Hublänge bei Werkstückabmessungen von 200 mm Durchmesser oder Vierkantquerschnitt ist 840 mm. Bei größeren Werkstückabmessungen muß die Hublänge verkleinert werden.

Die beiden Führungen 24 und die Führungsschiene 26 werden im Ausführungsbeispiel durch zwei STAR-Führungswagen und eine STAR-Schienenführung, Ausführung 1601, Größe 55 der Firma DEUTSCHE STAR GMBH in D-8720 Schweinfurt 1 gebildet. Diese Elemente bewirken eine drehfeste Schiebeführung, die Querkräfte in allen Richtungen aufnimmt.

Das Maschinengestell und das Hydraulikaggregat einschließlich Motor sind getrennt voneinander jeweils schwingungsisoliert aufgestellt. Dadurch ist eine schwingungsfreies Sägen möglich.

## Patentansprüche

1. Sägemaschine (1) mit einem in einem Maschinengestell (2) um eine Achse schwenkbar und linear verschiebbar gelagerten Werkzeugträger (3), an dem ein gerades Sägeblatt (16) befestigbar ist, mit einer Antriebsvorrichtung (Kolben-Zylinder-Einheit (36)) für die Verschiebebewegung des Werkzeugträgers (3), wobei der Werkzeugträger (3) im Maschinengestell derart angeordnet ist, daß die Richtung seiner Schnittbewegung gegenüber der Horizontalebene unter einem Winkel von mehr als 45°, vorzugsweise nahezu rechtwinklig verläuft, wobei der Arbeitshub des Sägeblatts (16) im wesentlichen von oben nach unten verläuft, dadurch gekennzeichnet, daß die Sägemaschine einen stoßenden Räumschnitt ausführt, daß die Achse (Lagerbolzen (6)) im oberen Bereich des Maschinengestells (2) angeordnet ist, daß Zähne (17) des Sägeblatts (16) zum Hauptteil des Werkzeugträgers (3) weisen, derart, daß ein zu sägendes Werkstück (33) im Inneren der von dem Werkzeugträger (3) und dem Sägeblatt (16) umschlossenen Fläche anzuordnen ist, daß die Schrägstellung des Sägeblatts (16) relativ zur Richtung der linearen Verschiebung des Werkzeugträgers (3) derart gewählt ist, daß unter der Annahme einer drehfesten Anordnung an der Achse die Zähne (17) während des Arbeitshubs des Sägeblatts (16) immer tiefer in das Werkstück eingreifen, und daß die Antriebsvorrichtung als hydraulische Antriebsvorrichtung, deren Hublänge veränderbar ist, ausgebildet ist.

2. Sägemaschine nach Anspruch 1, dadurch gekennzeichnet, daß zur Einstellung der Hublänge des Werkzeugträger (3) Endschalter oder Sensoren vorgesehen sind, die Endstellungen des Werkzeugträgers abtasten und daß mindestens einer der Endschalter oder ein mit diesem zusammenwirkendes Teil in seiner Lage veränderbar ist.

3. Sägemaschine nach einem der vorhergehenden Ansprüche, dadurch gekennzeichnet, daß zu Beginn eines Sägevorgangs die Verschieberichtung des Werkzeugträgers (3) annähernd vertikal verläuft.

4. Sägemaschine nach einem der vorhergehenden Ansprüche, dadurch gekennzeichnet, daß für die Vorschubbewegung des Werkzeugträgers (3) eine zweite Kolben-Zylinder-Einheit (42) vorgesehen ist.

5. Sägemaschine nach einem der vorhergehenden Ansprüche, dadurch gekennzeichnet, daß die Antriebsvorrichtung eine Mehrzahl von Pumpen (58, 59, 60) zur Förderung von Hydrauliköl aufweist, und daß die Pumpen durch einen Getriebemotor mit verstellbarer Übersetzung des Getriebes, vorzugsweise stufenloser Verstellbarkeit der Übersetzung, angetrieben sind.

6. Sägemaschine nach Anspruch 5, dadurch gekennzeichnet, daß die Wellen der Pumpen (58, 59, 60) gleichachsig angeordnet und gemeinsam angetrieben sind.

7. Sägemaschine nach Anspruch 5 oder 6, dadurch gekennzeichnet, daß die Druckseite einer Pumpe (59) mit einem Ausgang eines Ventils (V3) über ein Druckbegrenzungsventil (74) verbunden ist, das mit der Druckseite einer weiteren Pumpe (58) und wahlweise mit einem der beiden Anschlüsse einer den Werkzeugträger relativ zum Schwenkrahmen (10) antreibenden Antriebsvorrichtung über ein Steuerventil (V0) verbindbar ist.

8. Sägemaschine nach einem der Ansprüche 5 bis 7, dadurch gekennzeichnet, daß eine Pumpe (60) zum Antrieb einer Abhebe- und Vorschubsteuerung für das Sägeblatt (16) mittels einer Vorrichtung zur Volumensteuerung (79, 90) mit den Anschlüssen (52, 53) einer die Abhebe- und Vorschubbewegung ausführenden Antriebsvorrichtung verbindbar ist.

9. Sägemaschine nach Anspruch 8, dadurch gekennzeichnet, daß die Vorrichtungen zur Volumensteuerung (79, 90) einen in einem Zylinder (80) verschiebbaren Kolben (83) aufweisen, und daß eine Vorrichtung (Ventil V2, Rückschlagventile 86, 97) zum Zurückführen des Kolbens in seine Ausgangsstellung vorgesehen ist.

10. Sägemaschine nach einem der vorhergehenden Ansprüche, dadurch gekennzeichnet, daß eine Vorrichtung zum Verändern der Schrägstellung des Sägeblatts (16) relativ zum Werkzeugträger (3) vorgesehen ist.

11. Sägemaschine nach einem der vorhergehenden Ansprüche, dadurch gekennzeichnet, daß der Werkzeugträger (3) am Schwenkrahmen (10) mittels einer wälzgelagerten verdrehspielfreien Linearlagereinheit, die Querkräfte in allen Richtungen aufnimmt, verschiebbar geführt ist.

12. Sägemaschine nach einem der vorhergehenden Ansprüche, dadurch gekennzeichnet, daß eine Kühlmitteldüse (15) oberhalb des Werkstücks in konstantem Abstand von den Zähnen des Werkzeugs (16) angeordnet ist.

13. Sägemaschine nach einem der vorhergehenden Ansprüche, dadurch gekennzeichnet, daß eine Spannvorrichtung (Schraubstock) zum Festhalten des Werkstücks vorgesehen ist, bei der sich der waagrechte Abstand der Backen nach oben hin verkleinert.

14. Sägemaschine nach einem der vorhergehenden Ansprüche, dadurch gekennzeichnet, daß an einem Werkzeughalter (31) für das Sägeblatt (16) eine auf Werkzeugbruch ansprechende Schaltvorrichtung (105) angeordnet ist.

## Claims

1. A bench saw (1) with, mounted for displacement lineally and pivotally about an axis in a machine frame (2), a tool carrier (3) on which it is possible to fix a straight saw blade (16), with a driving device (a piston-cylinder unit (36)) for the displacement movement of the tool carrier (3), the tool carrier (3) being so disposed in the machine frame that the direction of its cutting movement in respect of the horizontal plane extends at an angle of more than 45° and preferably almost at a right-angle, the working stroke of the saw blade (16) extending substantially from the top downwardly, characterised in that the bench saw performs a pushing clearing cut and in that the axis (bearing bolt 6) is disposed in the upper portion of the machine frame (2) and in that teeth (17) of the saw blade (16) point to the main part of the tool carrier (3) so that a workpiece (33) which is to be sawn should be disposed within the surface embraced by the tool carrier (3) and the saw blade (16) and in that the oblique positioning of the saw blade (16) in relation to the direction of linear displacement of the tool carrier (3) is so chosen that assuming a rigid disposition on the axis the teeth (17) engage increasingly more deeply into the workpiece during the working stroke of the saw blade (16) and in that the driving device is constructed as a hydraulic driving device the length of travel of which is variable.

2. A bench saw according to Claim 1, characterised in that to adjust the length of stroke of the tool carrier (3) limit switches or sensors are provided which sense the extreme positions of the tool carrier and in that at least one of the limit switches or a part cooperating therewith is variable in its position.

3. A bench saw according to one of the preceding Claims, characterised in that at the start of a sawing operation the direction of displacement of the tool carrier (3) is approximately vertical.

4. A bench saw according to one of the preceding Claims, characterised in that for the forwards movement of the tool carrier (3) a second piston-cylinder unit (42) is provided.

5. A bench saw according to one of the preceding Claims, characterised in that the drive device comprises a plurality of pumps (58, 59, 60) to deliver hydraulic fluid and in that the pumps are driven by a geared motor with an adjustable gear transmission, preferably an infinitely adjustable transmission.

6. A bench saw according to Claim 5, characterised in that the shafts of the pump (58, 59, 60) are equi-axial and are jointly driven.

7. A bench saw according to Claim 5 or 6, characterised in that the pressure side of a pump (59) is connected to an outlet from a valve (V3) via a pressure-limiting valve (74) which can be connected via a control valve (V0) to the pressure side of a further pump (58) and optionally to one of the two connections of a driving device which drives a tool carrier in relation to the pivoting frame (10).

8. A bench saw according to one of Claims 5 to 7, characterised in that a pump (60) for driving a lifting and forward feed control for the saw blade (16) can by means of a device for volume control (79, 90) be connected to the connections (52, 53) of a driving device which performs the lifting and forwards movement.

9. A bench saw according to Claim 8, characterised in that the devices for volumetric control (79, 90) comprise a piston (83) adapted for displacement in a cylinder (80) and in that a device (valve V2, non-return valves 86, 97) are provided to return the piston to its starting position.

10. A bench saw according to one of the preceding Claims, characterised in that a device is provided for varying the oblique position of the saw blade (16) in relation to the tool carrier (3).

11. A bench saw according to one of the preceding Claims, characterised in that the tool carrier (3) is guided displaceably on the pivoting frame (10) by means of a bearing mounted rotatable and clearance-free linear bearing unit which accommodates transverse forces in all directions.

12. A bench saw according to one of the preceding Claims, characterised in that a coolant jet (15) is disposed above the workpiece and at a constant distance from the teeth of the tool (16).

13. A bench saw according to one of the preceding Claims, characterised in that a clamping device (a box clamp) is provided to grip the workpiece, the horizontal distance between the jaws diminishing upwardly.

14. A bench saw according to one of the preceding Claims, characterised in that there is disposed on a tool holder (31) for the saw blade (16) a switching device (105) which responds to tool breakage.

## Revendications

1. Machine à scier (1) comprenant un porte-outil (3), qui est supporté dans un châssis de machine (2) de manière à pouvoir pivoter autour d'un axe et se déplacer linéairement, et sur lequel une lame de scie droite (16) peut être fixée, un dispositif d'entraînement (unité piston-cylindre (36)) destiné au mouvement du porte-outil (3), celui-ci étant agencé dans le châssis de machine de manière telle que la direction de son mouvement de coupe par rapport au plan horizontal s'étend sous un angle supérieur à 45°, de préférence sensiblement à angle droit, la course de travail de la lame de scie (16) s'étendant sensiblement du haut vers le bas, caratérisée en ce que la machine à scier effectue une coupe par percussion, en ce que l'axe (tige de support (6)) est agencé dans la zone supérieure du châssis de machine (2), en ce que des dents (17) de la lame de scie (16) sont orientées vers la partie principale du porte-outil (3) de manière telle qu'une pièce à usiner à scier (33) soit à adjoindre à l'intérieur de la surface enfermée par le porte-outil (3) et la lame de scie (16), en ce que la position inclinée de la lame de scie (16) par rapport à la direction du déplacement linéaire du porte-outil (3) est sélectionnée de manière telle qu'en supposant un agencement solide en rotation sur l'axe, les dents (17) s'engagent toujours plus profondément dans la pièce à usiner pendant la course de travail de la lame de scie (16) et en ce que le dispositif d'entraînement est réalisé sous la forme d'un dispositif d'entraînement hydraulique dont la longueur de course est modifiable.

2. Machine à scier suivant la revendication 1, caractérisée en ce qu'il est prévu pour le réglage de la longueur de course du porte-outil (3) des interrupteurs de fin de course ou des capteurs, qui détectent des positions extrêmes du porte-outil, et en ce qu'au moins l'un des interrupteurs de fin de course ou une partie coopérant avec celui-ci soit modifiable dans sa position.

3. Machine à scier suivant l'une des revendications précédentes, caractérisée en ce que au commencement d'une opération de sciage la direction de déplacement du porte-outil (3) s'étend sensiblement verticalement.

4. Machine à scier suivant l'une des revendications précédentes, caractérisée en ce qu'il est prévu une deuxième unité piston-cylindre (42) destinée au déplacement d'avancement du porte-outil (3).

5. Machine à scier suivant l'une des revendications précédentes, caractérisée en ce que le dispositif d'entraînement présente plusieurs pompes (58, 59, 60) destinées au refoulement d'huile hydraulique et en ce que les pompes sont entraînées par un moteur à engrenage présentant un rapport d'engrenage réglable, de préférence un rapport avec possibilité de réglage progressif.

6. Machine à scier suivant la revendication 5, caractérisée en ce que les arbres des pompes (58, 59, 60) sont agencés suivant un même axe et sont entraînés ensemble.

7. Machine à scier suivant la revendication 5 ou 6, caractérisée en ce que le côté pression d'une pompe (59) est relié à une sortie d'une soupape (V3) par l'intermédiaire d'une soupape de limitation de pression (74), qui peut être reliée au côté pression d'une autre pompe (58) et sélectivement à l'un des deux raccordements d'un dispositif d'entraînement, qui entraîne le porte-outil par rapport au cadre de pivotement (10), par l'intermédiaire d'une soupape de commande (V0).

8. Machine à scier suivant l'une des revendications 5 à 7, caractérisée en ce qu'une pompe (60) destinée à l'entraînement d'un organe de commande du levage et de l'avancement de la lame de scie (16) peut être reliée, au moyen d'un dispositif pour la commande volumique (79, 90), aux raccordements (52, 53) d'un dispositif d'entraînement effectuant le mouvement de levage et d'avancement.

9. Machine à scier suivant la revendication 8, caractérisée en ce que les dispositifs pour la commande volumique (79, 90) présentent un piston (83) déplaçable dans un cylindre (80) et en ce qu'il est prévu un dispositif (soupape (V2), soupapes anti-retour 86, 97) pour ramener le piston à sa position initiale.

10. Machine à scier suivant l'une des revendications précédentes, caractérisée en ce qu'il est prévu un dispositif pour changer la position inclinée de la lame de scie (16) par rapport au porte-outil (3).

11. Machine à scier suivant l'une des revendications précédentes, caractérisée en ce que le porte-outil (3) est guide de manière coulissante sur le cadre de pivotement (10) au moyen d'une unité de positionnement linéaire sans jeu de rotation, qui est supportée par roulements et qui absorbe des forces transversales suivant toutes les directions.

12. Machine à scier suivant l'une des revendications précédentes, caractérisée en ce qu'un ajutage pour agent de refroidissement (15) est agencé au-dessus de la pièce à usiner à une distance constante des dents de l'outil (16).

13. Machine à scier suivant l'une des revendications précédentes, caractérisée en ce qu'il est prévu un dispositif de serrage (étau) pour maintenir la pièce à usiner, dans lequel la distance horizontale des mâchoires diminue vers le haut.

14. Machine à scier suivant l'une des revendications précédentes, caractérisée en ce qu'un dispositif d'interruption (105) répondant à une rupture d'outil est agencé pour la lame de scie (16) sur un élement de retenue d'outil (31).

Fig. 1

Fig. 2

Fig.3

14

Fig.4

Fig.5

Fig.6

Fig. 7

Fig. 8